# NEUE EUROPÄISCHE PATENTSCHRIFT

(11) **EP 2 201 229 B2**
(45) Veröffentlichungstag und Bekanntmachung des Hinweises auf die Entscheidung über den Einspruch: **09.03.2016**
(45) Hinweis auf die Patenterteilung: 26.01.2011
(21) Anmeldenummer: 07819338.0
(22) Anmeldetag: 26.10.2007
(51) Int. Cl.: F01N 3/20, F01N 13/14, B32B 1/08, F16L 11/12, F16L 11/127, F16L 53/00

(54) **VERFAHREN ZUR HERSTELLUNG EINES SYSTEMS ZUM LEITEN UND TEMPERIEREN EINER HARNSTOFF-WASSER-LÖSUNG UND VORRICHTUNG ZUR DURCHFÜHRUNG DES VERFAHRENS**
METHOD FOR PRODUCING A SYSTEM FOR GUIDING AND CONTROLLING THE TEMPERATURE OF A UREA/WATER SOLUTION, AND APPARATUS FOR CARRYING OUT THE METHOD
PROCÉDÉ DE PRODUCTION D'UN SYSTÈME PERMETTANT DE GUIDER ET DE TEMPÉRER UNE SOLUTION URÉE-EAU ET DISPOSITIF PERMETTANT DE METTRE EN OEUVRE CE PROCÉDÉ

(43) Veröffentlichungstag der Anmeldung: 30.06.2010
(73) Patentinhaber: Rehau AG + Co, 95111 Rehau (DE)
(72) Erfinder: GÖRMER, Lutz, 95111 Rehau (DE); MÜLLER, Jörg, 95028 Hof (DE); WEBER, Michael, 95131 Schwarzenbach/Wald (DE)
(86) Internationale Anmeldenummer: PCT/EP2007/009290
(87) Internationale Veröffentlichungsnummer: WO 2009/052849

(56) Entgegenhaltungen:
- DE-B3-102005 037 183
- DE-C1- 3 900 821
- DE-U1-202004 018 697
- DE-U1-202004 018 697
- FR-A- 2 874 075
- GB-A- 2 423 686
- JP-A- 2000 027 627
- US-A- 4 826 423
- US-B1- 6 190 480
- DOMININGHAUS H.: 'Die Kunststoffe und Ihre Eingenschaften', Bd. 4, 1992, VDI VERLAG, DÜSSELDORF Seiten 82 - 83
- OBERBACH ET AL.: 'SAECHTLING KUNSTSTOFF TASCHENBUCH', Bd. 29, 2004, CARL HANSER VERLAG, MÜNCHEN - WIEN Seiten 420-421 - 434-435
- "AdBlue" aus Wikipedia, http://de.wikipedia.org/wiki/AdBlue. heruntergeladen am 09.01.2012
- "Dichtungswerkstoffe für AdBlue® -Anwendungen, Parker Hannifn GmbH & Co. KG. 04/2009
- "Polyethyten" aus Wikipedia, http://de. wikipedia.org/wiki/Polyethylen, heruntergeladen am 09.01.2012
- "32.5 % Automotive Grade Urea Solution (nachstehend AUS 32) entsprechend ISO 22241 - Richtlinie zur Qualitätssicherung", Version 3.0, Association of Petrochemicals Producers in Europe, heruntergeladen aus dem Internet am 11.02.2014, http://www.petrochemistry.eu/component/atta chments/?task=download&id=169
- "Chemische Beständigkeit von Kunststoffen", Kuhnke Technologies, Know-How Medizitechnik, Version 2.0e, 29.07.2003, Bürkle GmbH, aufrufbar im Internet unter http://www.kuhnke.de/fileadmin/templates/co ntent/Automation/Branchen/Medizintechnik/76 4343 chemische_bestaendigkeit.pdf

## Beschreibung

### Hintergrund der Erfindung

Die vorliegende Erfindung betrifft ein Verfahren zur Herstellung eines Systems zum Leiten und Temperieren einer Harnstoff-Wasser-Lösung, wobei das System eine Fluid-Leitung aufweist, die für die Durchströmung mit einer Harnstoff-Wasser-Lösung vorgesehen ist, wobei die Fluid-Leitung wenigstens einen Abschnitt mit einer vorgegebenen Länge aufweist, um den herum wenigstens ein Heizleiter gewickelt ist, und wobei das System ferner wenigstens eine Ummantelung aus Polymermaterial aufweist, die den Abschnitt umgibt und den Heizleiter bedeckt, bei dem der wenigstens eine Heizleiter um den wenigstens einen Abschnitt der Fluid-Leitung gewickelt wird, und bei dem, vorzugsweise bevor der Heizleiter entlang der gesamten vorgegebenen Länge um den Abschnitt gewickelt ist, wenigstens eine Schicht aus Polymermaterial, um Bereiche des Abschnitts gewickelt wird, um die der Heizleiter bereits gewickelt worden ist, bis der Abschnitt entlang zumindest eines Teils der vorgegebenen Länge, vorzugsweise der gesamten vorgegebenen Länge, von der Schicht aus Polymermaterial umwickelt ist, um die Ummantelung aus Polymermaterial zu bilden, die den Abschnitt umgibt und den Heizleiter bedeckt.

Ein Verfahren zur Herstellung einer Leitung für Harnstoff-Wasser-Lösungen ist aus der Druckschrift DE 20 2004 018 697 U1 bekannt. Bei bestimmten flüssigen oder gasförmigen Medien ist es notwendig, diese bei Durchströmung von Fluid-Leitungen, wie beispielsweise Schläuchen, zu temperieren. Dies gilt insbesondere für eine Harnstoff-Wasser-Lösung nach DIN 70070 und CEFIC (European Chemical Industry Council) Regularien, die den Verbrennungsgasen von Dieselmotoren zugegeben wird, um vor allem die Stickoxidemissionen zu senken und damit die gestiegenen Anforderungen der Abgasvorschriften zu erfüllen. Für die Leitung der Harnstoff-Wasser-Lösung aus einem Tank zur Einspritzung in die Verbrennungsgase ist eine Temperierungsmöglichkeit der Fluid-Leitung nötig, weil die Harnstoff-Wasser-Lösung aufgrund der chemischen Zusammensetzung den Nachteil aufweist, dass sie bei minus 11°C ausflockt/gefriert. Weitere negative Eigenschaften der Harnstoff-Wasser-Lösung bestehen darin, dass sie korrosiv und abhängig von der Temperatur kriechfähig ist.

Aus dem Stand der Technik sind daher Systeme bekannt, die neben der Leitung einer Harnstoff-Wasser-Lösung auch für die Temperierung einer Harnstoff-Wasser-Lösung ausgebildet sind. Bekannte, für die Temperierung einer Harnstoff-Wasser-Lösung verwendete Temperierungsmittel sind beispielsweise Heizleiter, die innerhalb oder außerhalb einer für die Durchströmung mit einer Harnstoff-Wasser-Lösung vorgesehenen Fluid-Leitung (sog. HWL-Leitung) angeordnet sind. Es sind also grundsätzlich zwei unterschiedliche Leitungsvarianten bekannt, umfassend eine Innenbeheizung, bei der der Heizleiter sich im zu erwärmenden Medium befindet, und eine Außenbeheizung, bei der sich der Heizeiter außerhalb der medienführenden Leitung, beispielsweise in Form eines Rohrs, befindet (parallel zum Rohr bzw. um das Rohr herumgewickelt).

Ferner weisen insbesondere bekannte Systeme, bei denen der Heizleiter um die Fluid-Leitung gewickelt ist, eine Ummantelung aus Polymermaterial auf, die wenigstens einen Abschnitt der Fluid-Leitung umgibt und den Heizleiter bedeckt. Die Ummantelung ist bei diesen bekannten Systemen gebildet durch eine um die Fluid-Leitung gewickelte Schicht aus Polymermaterial in Form eines üblichen Tapes bzw. Bands aus Polymermaterial, das den Heizleiter bedeckt. Eine derartige bekannte Ummantelung ermöglicht eine Fixierung des Heizleiters. Alternativ wird die Fixierung auch oft mittels eines aufgeschrumpften Schrumpfschlauchs realisiert. Die Herstellung dieser bekannten Systeme erfolgt mittels eines Verfahrens bei dem der Heizleiter um einen Abschnitt der Fluid-Leitung gewickelt wird, und bei dem, vorzugsweise bevor der Heizleiter entlang einer gesamten Länge des Abschnitt um diesen gewickelt ist, das Tape um Bereiche des Abschnitts gewickelt wird, um die der Heizleiter gewickelt worden ist, bis der Abschnitt entlang der gesamten vorgegebenen Länge von dem Tape umwickelt ist, um die den Heizleiter fixierende Ummantelung zu bilden. Ferner weisen bekannte Systeme zum Leiten und Temperieren einer Harnstoff-Wasser-Lösung ein die Ummantelung umgebendes Schaumtape als Isolierschicht auf, das wiederum von Coflex (geteiltes Wellrohr) als Schutzrohr (z.B. gegen Steinschlag, etc.) umgeben ist.

Insgesamt betrachtet ist der Aufbau derartiger bekannter Systeme recht aufwendig, und infolge dessen ist auch deren Herstellung recht aufwendig, die mit personalintensiven Arbeitsgängen und einem entsprechenden geringen Automatisierungsgrad verbunden ist.

### Zugrundeliegende Aufgabe

Der vorliegenden Erfindung liegt daher die Aufgabe zugrunde, ein Verfahren anzugeben, mit dem ein System zum Leiten und Temperieren einer Harnstoff-Wasser-Lösung hergestellt werden kann, das gegenüber bekannten Lösungen deutlich weniger aufwendig aufgebaut ist, und mit dem zudem eine Herstellung möglich ist, die einen gegenüber bekannten Lösungen deutlich erhöhten Automatisierungsgrad aufweist.

### Erfindungsgemäße Lösung

Diese Aufgabe wird erfindungsgemäß durch die Merkmale des Patentanspruchs 1 gelöst.

Erfindungsgemäß wird das bekannte Tape ersetzt durch eine durch einen Extrusionsprozess erzeugte Schicht aus Polymermaterial bzw. Kunststoffschicht, die vorzugsweise bandförmig ausgebildet ist, und um bereits mit Heizleiter umwickelte Bereiche des Abschnitts gewickelt, wobei der Heizleiter vorzugsweise in Form eines Heizdrahts ausgebildet ist. Der Extrusionsprozess umfasst vorzugsweise die Bildung der Schicht aus Polymermaterial mittels eines Extruders, der vorzugsweise zur Herstellung einer bandförmigen Kunststoffschicht eine hierfür geeignet ausgebildete Düse aufweist.

Erfindungsgemäß wird die Wicklung um die Bereiche des Abschnitts, um die der Heizleiter gewickelt worden ist, vor einem Aushärten der Schicht aus Polymermaterial vorgenommen. Die Wicklung der durch den Extrusionsprozess erzeugten Schicht aus Polymermaterial erfolgt zeitnah bzw. kurz nach ihrer Herstellung, so dass eine infolge des Extrusionsprozesses warme und noch nicht ausgehärtete Schicht um die mit dem Heizleiter bereits umwickelten Bereiche gewickelt wird. Die Aushärtung der Schicht aus Polymermaterial erfolgt somit im aufgewickelten Zustand, so dass erfindungsgemäß eine Ummantelung gebildet werden kann, die in Form einer zusammenhängen Ummantelung ausgebildet ist, bei der die einzelnen Wicklungsabschnitte im wesentlichen stoffschlüssig miteinander verbunden sind, da ihre Aushärtung erst im aufgewickelten Zustand erfolgt.

Die mittels des erfindungsgemäßen Verfahrens herstellbare Ummantelung weist im Unterschied zu der bekannten Umwicklung mittels eines Tapes den Vorteil auf, dass sie neben einer sehr wirksamen Fixierung des Heizleiters weitere positive Eigenschaften aufweist. So ist die Ummantelung zugleich auch eine sehr wirksame Isolationsschicht und auch Schutzschicht. Die Ummantelung stellt somit mehrere positive Eigenschaften bereit, die bei bekannten Systemen durch zusätzliche Elemente, wie etwa einem die Ummantelung umgebenden Schaumtape als Isolierschicht, bzw. durch Coflex (geteiltes Wellrohr) als Schutzrohr (z.B. gegen Steinschlag, etc.) bereitgestellt werden.

Ferner ist das erfindungsgemäße Verfahren nicht darauf beschränkt, eine Umwicklung mit einem Heizleiter vorzusehen. Erfindungsgemäß ist auch vorgesehen, jeden beliebigen Leiter zusätzlich zum Heizleiter gemäß dem erfindungsgemäßen Verfahren um wenigstens einen Abschnitt der Fluid-Leitung zu wickeln und gemäß dem erfindungsgemäßen Verfahren mit einer Ummantelung aus Polymermaterial zu bedecken. So kann beispielsweise ein elektrischer Leiter für die Stromversorgung des Heizleiters ebenfalls um die Fluid-Leitung gewickelt und mittels des erfindungsgemäßen Verfahrens von der Ummantelung bedeckt werden. Gleiches gilt allgemein für Funktionsteile, wie z.B. Temperaturmessfühler oder Sensoren oder dergleichen.

Insgesamt betrachtet kann mittels des erfindungsgemäßen Verfahrens ein gegenüber bekannten Lösungen deutlich erhöhter Automatisierungsgrad erzielt werden. Weitere Vorteile umfassen eine Reduzierung der Herstellkosten, eine Reduzierung des Materialaufwands, da erfindungsgemäß nur noch eine Schicht, nämlich in Form der erfindungsgemäßen Ummantelung erforderlich ist, eine Nutzung der Ummantelung für verschieden Produkteigenschaften und eine deutliche Redzierung der Abmessung der Fluid-Leitung gegenüber bisher bekannten Lösungen.

### Vorteilhafte Weiterbildungen der Erfindung

Bei einer vorteilhaften Weiterbildung der Erfindung wird der Heizleiter spiralförmig um den Abschnitt der Fluid-Leitung gewickelt.

Mittels einer spiralförmigen Umwicklung der Fluid-Leitung, die vorzugsweise in Form eines Rohrs oder eines Schlauchs ausgebildet sein kann, kann eine sehr gleichmäßige Erwärmung der Fluid-Leitung und damit auch eine gleichmäßige Erwärmung einer in der Fluid-Leitung aufgenommenen Harnstoff-Wasser-Lösung erfolgen. Hieran angepasst wird auch die Schicht aus Polymermaterial vorzugsweise spiralförmig um die Bereiche des Abschnitts gewickelt wird, um die der Heizleiter gewickelt worden ist.

Bei einer besonderes praktischen Weiterbildung der Erfindung wird der Heizleiter vor dem Umwickeln in eine Schlaufenform gebracht. Ein in Schlaufenform gebrachter Heizleiter weist den Vorteil auf, dass an dem offen Ende der Schlaufe zwei Anschlussmöglichkeiten zu Anschluss an einen Plus-Pol bzw. einen Minus-Pol einer Stromversorgung bereitgestellt werden, so das bereits an einem Ende des aufgewickelten Heizleiters eine Anschlussmöglichkeit an eine geeignete Stromquelle bereitgestellt wird. Eine aufwendige Rückführung des Heizleiters nach Aufwicklung von einem Ende der Fluid-Leitung zu dem anderen Ende der Fluid-Leitung ist somit nicht erforderlich.

Es wird im Folgenden eine Vorrichtung zur Herstellung eines Systems zum Leiten und Temperieren einer Harnstoff-Wasser-Lösung beschrieben, mir der vorzugsweise insbesondere das erfindungsgemäße Verfahren durchführbar bzw. ausführbar ist, wobei das System eine Fluid-Leitung aufweist, die für die Durchströmung mit einer Harnstoff-Wasser-Lösung vorgesehen ist, wobei die Fluid-Leitung wenigstens einen Abschnitt aufweist, um den herum wenigstens ein Heizleiter gewickelt ist, und wobei das System ferner wenigstens eine Ummantelung aus Polymermaterial aufweist, die den Abschnitt umgibt und den Heizleiter bedeckt, wobei die Vorrichtung eine Rotationsvorrichtung aufweist, an welche die Fluid-Leitung anbringbar ist, um die Fluid-Leitung um eine Längsachse der Fluid-Leitung zu rotieren, und wenigstens eine in Richtung der Längsachse bewegliche Einheit aufweist, wobei die bewegliche Einheit dafür vorgesehen ist, den wenigstens einen Heizleiter während einer Rotation der Fluid-Leitung durch die Rotationsvorrichtung an der Fluid-Leitung vorbeizuführen, um den wenigstens einen Abschnitt mit dem wenigstens einen Heizleiter spiralförmig zu umwickeln, und wobei die bewegliche Einheit ferner dafür vorgesehen ist, wenigstens eine Schicht aus Polymermaterial während einer Rotation der Fluid-Leitung durch die Rotationsvorrichtung an der Fluid-Leitung vorbeizuführen, um zur Bildung der wenigstens einen Ummantelung eine spiralförmige Wicklung der Schicht aus Polymermaterial um den wenigstens einen Abschnitt zu bilden.

Durch Verwendung der Vorrichtung kann insbesondere das erfindungsgemäße Verfahren zur Herstellung des Systems zum Leiten und Temperieren einer Harnstoff-Wasser-Lösung nahezu vollständig automatisiert ausgeführt werden, um ein System zu schaffen, das die oben dargelegten Vorteile aufweist. Hierzu weist die Vorrichtung neben einer Rotationsvorrichtung wenigstens eine in Richtung der Längsachse der Fluid-Leitung bewegliche Einheit auf, die dafür vorgesehen ist, während einer Rotation der Fluid-Leitung um eine vorzugsweise zentrale Längsachse den aufzuwickelnden Heizleiter und die Schicht aus Polymermaterial an der Fluid-Leitung vorbeizuführen, um so eine Umwicklung wenigstens eines Abschnitts der Fluid-Leitung mit dem Heizleiter und der vorzugsweise bandförmig ausgebildeten Schicht aus Polymermaterial zu realisieren, wobei der Heizleiter bzw. die Schicht aus Polymermaterial vor der Vorbeiführung an der Fluid-Leitung bevorzugt mit wenigstens einem Abschnitt an der Fluid-Leitung oder an einem an der Fluid-Leitung angebrachten Konnektor bzw. Anschlusselement angebracht werden.

Bei einer vorteilhaften Weiterbildung weist die Vorrichtung eine Extrusionsvorrichtung zur Bildung der Schicht aus Polymermaterial auf, wobei die Extrusionsvorrichtung bevorzugt an der beweglichen Einheit angebracht ist. Es kann so während einer Vorbeiführung der beweglichen Einheit an einer rotierenden Fluid-Leitung, die durch die Rotationsvorrichtung in Rotation versetzt wird, eine Schicht aus Polymermaterial um bereits mit einem Heizleiter umwickelte Bereiche wenigstens eines Abschnitts der Fluid-Leitung gewickelt werden, und zwar, wie es auch gemäß des erfindungsgemäßen Verfahrens vorgesehen ist, kurz nach Erzeugung mittels der Extrusionsvorrichtung, so dass eine infolge des Extrusionsprozesses warme und noch nicht ausgehärtete Schicht um die mit dem Heizleiter bereits umwickelten Bereiche gewickelt wird, einhergehend mit den oben beschriebenen Vorteilen.

Bevorzugt ist die Extrusionsvorrichtung dazu ausgebildet ist, eine bandförmige Schicht aus Polymermaterial zu bilden, wobei die Extrusionsvorrichtung hierfür bevorzugt eine geeignet ausgebildete Düse aufweist.

Bei einer praktischen Weiterbildung der Vorrichtung ist die bewegliche Einheit in Form eines in Richtung der Längsachse der Fluid-Leitung geführten Schlittens ausgebildet, um eine zuverlässig geführte Vorbeiführung des Heizleiters an der Fluid-Leitung zu ermöglichen.

### Kurzbeschreibung der Zeichnungen

Nachfolgend werden Ausführungsbeispiele der Erfindung anhand der beigefügten Zeichnungen näher erläutert. Es zeigt:
Fig. 1 oben eine schematische Darstellung eines erfindungsgemäßen Systems zum Leiten und Temperieren einer Harnstoff-Wasser-Lösung, und unten einen schematischen Querschnitt des erfindungsgemäßen Systems; und
Fig. 2 eine schematische Darstellung der Vorrichtung zur Herstellung des Systems.

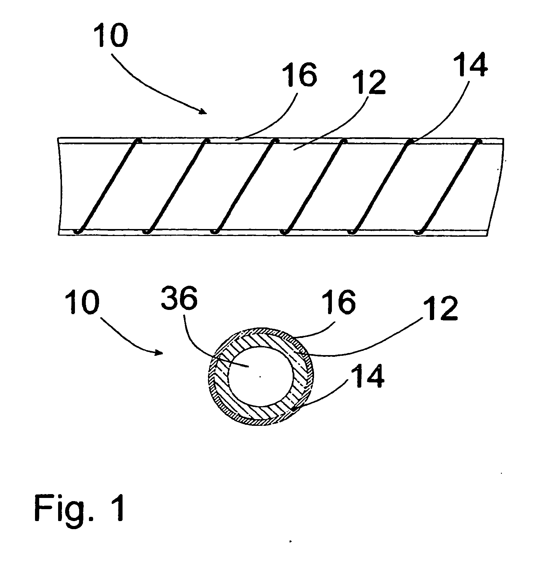

Fig. 1 zeigt oben eine schematische Darstellung eines erfindungsgemäßen Systems 10, das eine Fluid-Leitung 12, die für die Aufnahme bzw. Durchströmung mit einer Harnstoff-Wasser-Lösung vorgesehen ist (nachfolgend HWL-Leitung genannt), und vorliegend in Form eines Schlauchs oder eines Rohrs ausgebildet ist, einen um die HWL-Leitung 12 gewickelten elektrischen Heizleiter 14 und eine Ummantelung 16 aus Polymermaterial aufweist, welche die HWL-Leitung 12 umgibt und den Heizleiter 14 bedeckt, wobei der Heizleiter 14 für eine Erwärmung der HWL-Leitung 12 und damit auch für eine Erwärmung einer in der HWL-Leitung 12 aufgenommenen Harnstoff-Wasser-Lösung vorgesehen ist.

Fig. 1 zeigt unten einen schematischen Querschnitt des erfindungsgemäßen Systems 10, mit einem für die Aufnahme bzw. Durchströmung mit einer Harnstoff-Wasser-Lösung vorgesehenen Innenvolumen 36. Die Ummantelung 16 aus Polymermaterial, die gemäß dem erfindungsgemäßen Verfahren gebildet wurde und den Heizleiter 14 bedeckt, weist neben einer sehr wirksamen Fixierung des Heizleiters 14 weitere positive Eigenschaften auf. So ist die Ummantelung 16 zugleich auch eine sehr wirksame Isolationsschicht und auch Schutzschicht. Die Ummantelung 16 stellt somit mehrere positive Eigenschaften bereit, die bei bekannten Systemen durch zusätzliche Elemente, wie etwa einem die Ummantelung 16 umgebenden Schaumtape als Isolierschicht, und durch Coflex (geteiltes Wellrohr) als Schutzrohr (z.B. gegen Steinschlag, etc.) bereitgestellt werden.

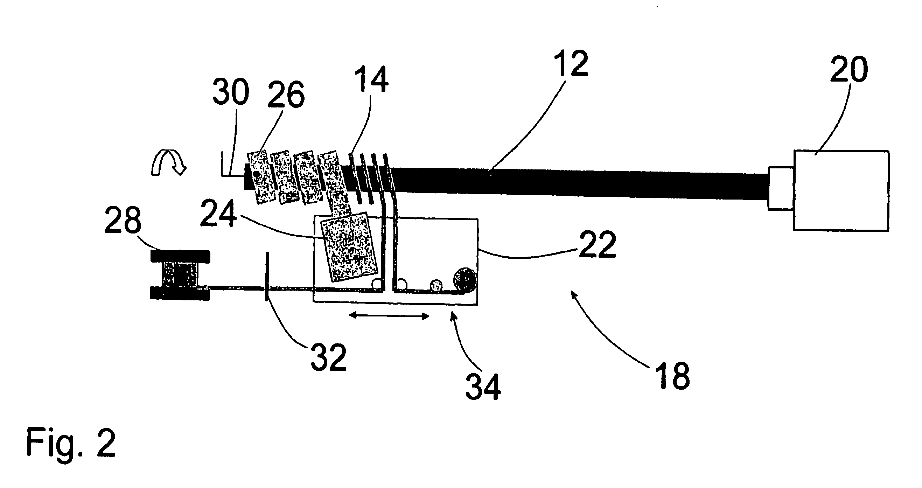

Fig. 2 zeigt eine schematische Darstellung der Vorrichtung 18 zur Herstellung des Systems 10.

Die Herstellungs-Vorrichtung 18 umfasst eine Rotationsvorrichtung 20, an die eine HWL-Leitung 12 anbringbar ist, und eine geradlinig bewegliche Einheit in Form eines Schlittens 22, der mit einer nicht näher dargestellten Antriebseinheit geradlinig bewegt werden kann. An dem Schlitten 22 ist eine Extrusionsvorrichtung 24 angebracht, die mittels einer geeignet ausgebildeten Düse (nicht näher dargestellt) dazu ausgebildet ist, eine bandförmige Schicht aus Polymermaterial 26 zu extrudieren. Ferner weist die dargestellte Vorrichtung eine Heizleiterspule 28 auf, die eine Spulenachse aufweist, die vorzugsweise von einem Motor (nicht näher dargestellt) antreibbar ist, um eine Motor betriebene Abwicklung oder Aufwicklung eines Heizleiter 14 von der Spule 28 oder auf die Spule 28 bereitzustellen. Auch die Rotationsvorrichtung 20 wird durch einen Motor (nicht näher dargestellt) angetrieben.

In Fig. 2 dargestellt ist die Situation, bei der eine HWL-Leitung 12 an der Rotationsvorrichtung 20 fest angebracht ist, wobei die Darstellung der Fig. 2 eine Momentaufnahme eines erfindungsgemäßen Wickelvorgangs ist, bei dem der Heizleiter 14 und die bandförmige Schicht aus Polymermaterial 26 um die HWL-Leitung 12 gewickelt werden. Vor der Wickelung wird erfindungsgemäß zunächst wenigstens ein Abschnitt des Heizleiters an einem Endabschnitt (in Fig. 1 an einem linken Endabschnitt) der HWL-Leitung 12 angebracht. Auch ein vorzugsweise noch nicht ausgehärteter, warmer Abschnitt, vorzugsweise Anfangsabschnitt der bandförmigen Schicht aus Polymermaterial 26, gebildet von der Extrusionsvorrichtung 24, wird vor dem eigentlichen Wickelvorgang vorzugsweise an diesem Endabschnitt der HWL-Leitung 12 angebracht, um insgesamt sicherzustellen, dass sowohl der Heizleiter 14 als auch die bandförmige Schicht aus Polymermaterial 26 bei Drehung der HWL-Leitung 12 um ihre Längsachse 30 um diese gewickelt werden bzw. sich um diese herumlegen.

Erfindungsgemäß kann der zur Anbringung an die HWL-Leitung 12 vorgesehene Abschnitt des Heizleiters 14 vor dem eigentlichen Wickelvorgang auch an ein Anschlusselement oder einen Konnektor oder einen Stecker (nicht näher dargestellt) der HWL-Leitung 12 angebracht werden, indem er um das Anschlusselement oder den Konnektor oder den Stecker gewickelt, und vorzugsweise zusätzlich mit Formteilen fixiert wird, wobei der Stecker insbesondere ein Verbindungsstecker sein kann, der das gesamte fertige System 10 zum Leiten und Temperieren einer Harnstoff-Wasser-Lösung innerhalb des Fahrzeugs fixiert, in dem das fertige System 10 angeordnet ist.

Alternativ kann auch der Abschnitt bzw. Anfangsabschnitt der bandförmigen Schicht aus Polymermaterial 26 über ein Anschlusselement des Verbindungssteckers gebracht werden, so dass eine Abdichtung zwischen dem entsprechenden Formteil, vorzugsweise in Form einer Halbschale, und der HWL-Leitung 12 gegeben ist.

Zur Durchführung des erfindungsgemäßen Verfahrens wird der Schlitten 22 während einer mittels der Rotationsvorrichtung 20 bereitgestellten Rotation der HWL-Leitung 12 um ihre Längsachse 30 an dieser vorbeigeführt, um eine spiralförmige Umwicklung der HWL-Leitung 12 mit dem Heizleiter 14 zu realisieren, der während der Vorbeiführung an der HWL-Leitung 12 von der Heizleiterspule 28 abgewickelt wird, wobei die Abwicklung mittels des an die Spulenachse der Heizleiterspule 28 gekoppelten Motors vorgenommen wird. Um hierbei eine möglichst gleichmäßige und fehlerfreie Umwicklung zu schaffen, mit der letztlich eine homogene Ummantelung 16 geschaffen werden kann, welche neben der elektrischen Isolation auch eine mechanische Schutzwirkung sowie eine thermische Isolation gewährleistet, werden der Motor der Heizleiterspule 28 und der Motor der Rotationsvorrichtung 20 derart aufeinander abgestimmt, dass die pro Zeiteinheit von der Heizleiterspule 28 abgewickelte Heizleiterlänge im wesentlichen der pro Zeiteinheit auf die HWL-Leitung aufgewickelten Heizleiterlänge entspricht.

Ferner ist eine schematisch dargestellte Durchhangsteuerung 32 vorgesehen, die mittels einer geeigneten Sensorik ein "Durchhäng"-Maß des Heizleiters erfasst, und bei Überschreiten einer vorgegebenen Soll-Vorgabe geeignete Steuerungsbefehle an eine Motorsteuerung des Motors der Heizleiterspule 28 bzw. der Rotationsvorrichtung 20 übergibt, um einem übermäßigen nachteiligen Durchhängen entgegenzuwirken.

Wie der Fig. 2 zu entnehmen, ist erfindungsgemäß vorgesehen, bereits mit dem Heizleiter 14 umwickelte Bereiche mit der bandförmigen Schicht aus Polymermaterial 26 zu umwickeln, derart, dass sich während der Rotation der HWL-Leitung 12 die Schicht 26 um die HWL-Leitung 12 und den Heizleiter 14 herumlegt, und zwar vorzugsweise bevor ein für die Umwicklung vorgesehener Abschnitt der HWL-Leitung 12 entlang seiner gesamten Länge mit dem Heizleiter 14 umwickelt ist. So kann erfindungsgemäß während eines einmaligen Vorbeiführens des Schlittens 22 an der HWL-Leitung 12 sowohl die Heizleiter-Umwicklung als auch die Umwicklung mit der bandförmigen Schicht aus Polymermaterial 26 vorgenommen werden, einhergehend mit deutlich reduzierten Herstellungszeiten, im Vergleich zu Lösungen, bei denen die Umwicklung mit der bandförmigen Schicht aus Polymermaterial 26 erst erfolgt, nachdem der Heizleiter 14 entlang der gesamten Länge des für die Umwicklung vorgesehenen Abschnitts um diesen gewickelt worden ist.

Insbesondere erfolgt die Umwicklung mit der bandförmigen Schicht aus Polymermaterial 26 um bereits mit dem Heizleiter 14 umwickelte Bereiche kurz nach Erzeugung dieser Schicht durch die Extrusionsvorrichtung 24, so dass eine infolge des Extrusionsprozesses warme und noch nicht ausgehärtete Schicht 26 um die mit dem Heizleiter 14 bereits umwickelten Bereiche gewickelt bzw. aufgetragen wird, einhergehend mit der Bildung der homogenen, den Heizleiter 14 bedeckenden vorteilhaften Ummantelung 16.

Der Heizleiter 14 wird vorzugsweise in Schlaufenform um die HWL-Leitung 12 gewickelt, wobei hierfür an dem Schlitten 22 ein Heizleiter-Zwischenspeicher 34 angebracht ist, um vor der Umwicklung einen in Schlaufenform gebrachten Heizleiter 14 bereitzustellen, dessen Länge angepasst ist an die Länge des für die Umwicklung vorgesehenen Abschnitts der HWL-Leitung 12.

### Bezugszeichenliste

- 10: System zum Leiten und Temperieren einer Harnstoff-Wasser-Lösung
- 12: HWL-Leitung
- 14: Heizleiter
- 16: Ummantelung
- 18: Vorrichtung zur Herstellung des Systems
- 20: Rotationsvorrichtung
- 22: Schlitten
- 24: Extrusionsvorrichtung
- 26: Schicht aus Polymermaterial
- 28: Heizleiterspule
- 30: Längsachse
- 32: Durchhangsteuerung
- 34: Heizleiter-Zwischenspeicher
- 36: Innenvolumen

## Patentansprüche

1. Verfahren zur Herstellung und Nutzung eines eine Fluid-Leitung (12) aufweisenden Systems (10),
- wobei das hergestellte System (10) zum Leiten und Temperieren einer Harnstoff-Wasser-Lösung aus einem Tank zur Einspritzung in Verbrennunasabgase verwendet und hierbei die Fluidleitung (12) von der Harnstoff-Wasser-Lösung durchströmt wird,
- wobei die Fluid-Leitung (12) wenigstens einen Abschnitt mit einer vorgegebenen Länge aufweist, um den herum wenigstens ein Heizleiter (14) gewickelt ist,
- wobei das System (10) ferner wenigstens eine Ummantelung (16) aus Polymermaterial (26) aufweist, die den Abschnitt umgibt und den Heizleiter (14) bedeckt, bei dem der wenigstens eine Heizleiter (14) um den wenigstens einen Abschnitt der Fluid-Leitung (12) gewickelt wird, und bei dem, vorzugsweise bevor der Heizleiter (14) entlang der gesamten vorgegebenen Länge um den Abschnitt gewickelt ist, wenigstens eine Schicht aus Polymermaterial (26) um Bereiche des Abschnitts gewickelt wird, um die der Heizleiter (14) bereits gewickelt worden ist, bis der Abschnitt entlang zumindest eines Teils der vorgegebenen Länge von der Schicht aus Polymermaterial (26) umwickelt ist, um die Ummantelung (16) aus Polymermaterial zu bilden, die den Abschnitt umgibt und den Heizleiter (14) bedeckt,
**dadurch gekennzeichnet, dass** die Schicht aus Polymermaterial (26) durch einen Extrusionsprozess erzeugt wird, dass die Wicklung um die Bereiche des Abschnitts, um die der Heizleiter (14) gewickelt worden ist, vor einem Aushärten der Schicht aus Polymermaterial (26) vorgenommen wird, so dass die einzelnen Wicklungsabschnitte im wesentlichen stoffschlüssig miteinander verbunden werden, und dass das Polymermaterial (26) der Ummantelung als geschäumtes Thermoplast ausgebildet ist.

2. Verfahren nach Anspruch 1, **dadurch gekennzeichnet, dass** der Heizleiter (14) spiralförmig um den Abschnitt der Fluid-Leitung (12) gewickelt wird.

3. Verfahren nach Anspruch 1 oder 2, **dadurch gekennzeichnet, dass** die Schicht aus Polymermaterial (26) spiralförmig um die Bereiche des Abschnitts gewickelt wird, um die der Heizleiter (14) gewickelt worden ist.

4. Verfahren nach einem der vorangehenden Ansprüche, **dadurch gekennzeichnet, dass** der Heizleiter (14) vor dem Umwickeln in eine Schlaufenform gebracht wird.

5. Verfahren nach einem der vorangehenden Ansprüche, **dadurch gekennzeichnet, dass** die durch den Extrusionsprozess erzeugte Schicht aus Polymermaterial (26) bandförmig ausgebildet ist.

## Claims

1. Method for producing and using a system (10) having a fluid line (12),
- with the produced system (10) being used for conducting and controlling the temperature of a urea-water solution out of a tank for injection into combustion exhaust gases, and here, the fluid line (12) being flowed through by the urea-water solution,
- with the fluid line (12) having at least one section of a predefined length, around which section at least one heat conductor (14) is wound,
- with the system (10) also having at least one casing (16) which is composed of polymer material (26) and which surrounds the section and covers the heat conductor (14), in which method the at least one heat conductor (14) is wound around the at least one section of the fluid line (12), and in which method, preferably before the heat conductor (14) is wound around the section over the entire predefined length, at least one layer of polymer material (26) is wound around regions of the section around which the heat conductor (14) has already been wound, until the section is wrapped in the layer of polymer material (26) over at least a part of the predefined length such that the casing (16) which is composed of polymer material and which surrounds the section and covers the heat conductor (14) is formed,
**characterized in that** the layer of polymer material (26) is produced by means of an extrusion process, **in that** the winding around those regions of the section around which the heat conductor (14) has been wound is carried out before the layer of polymer material (26) hardens, such that the individual winding sections are connected to one another substantially cohesively, and **in that** the polymer material (26) of the casing is formed as a foamed thermoplastic.

2. Method according to Claim 1, **characterized in that** the heat conductor (14) is wound in spiral form around the section of the fluid line (12).

3. Method according to Claim 1 or 2, **characterized in that** the layer of polymer material (26) is wound in spiral form around those regions of the section around which the heat conductor (14) has been wound.

4. Method according to one of the preceding claims, **characterized in that** the heat conductor (14) is placed into the form of a loop before the winding process.

5. Method according to one of the preceding claims, **characterized in that** the layer of polymer material (26) which is generated by the extrusion process is of strip-shaped form.

## Revendications

1. Procédé de fabrication et utilisation d'un système (10) présentant un conduit (12) de fluide,
- le système (10) fabriqué étant utilisé pour conduire et réguler en température une solution d'urée aqueuse provenant d'un réservoir pour l'injection dans des gaz d'échappement de combustion et le conduit (12) de fluide étant ainsi traversé par la solution d'urée aqueuse,
- le conduit (12) de fluide présentant au moins un tronçon de longueur prédéterminée autour duquel au moins un conducteur chauffant (14) est enroulé,
- le système (10) présentant en outre au moins une enveloppe (16) en matériau polymère (26) qui entoure le tronçon et recouvre le conducteur chauffant (14), le ou les conducteurs chauffants (14) étant enroulés autour d'au moins un tronçon du conduit (12) de fluide, de préférence avant que le conducteur chauffant (14) soit enroulé autour de toute la longueur prédéterminée du tronçon, au moins une couche de matériau polymère (26) étant enroulée autour de parties du tronçon autour desquelles le conducteur chauffant (14) a déjà été enroulé, jusqu'à ce que le tronçon soit entouré par la couche de matériau polymère (26) sur au moins une partie de la longueur prédéterminée, pour former l'enveloppe (16) en matériau polymère qui recouvre le tronçon et le conducteur chauffant (14),
**caractérisé en ce que** la couche de matériau polymère (26) est formée par une opération d'extrusion, **en ce que** l'enroulement autour des parties du tronçon autour desquelles le conducteur chauffant (14) est enroulé étant réalisé avant le durcissement de la couche de matériau polymère (26), de telle sorte que les tronçons d'enroulement individuels sont connectés les uns aux autres essentiellement par engagement par liaison de matière, et **en ce que** le matériau polymère (26) de l'enveloppe est réalisé sous forme de matériau thermoplastique moussé.

2. Procédé selon la revendication 1, **caractérisé en ce que** le conducteur chauffant (14) est enroulé en spirale autour du tronçon du conduit (12) de fluide.

3. Procédé selon la revendication 1 ou 2, **caractérisé en ce que** la couche de matériau polymère (26) est enroulée en spirale autour des parties du tronçon autour desquelles le conducteur chauffant (14) a été enroulé.

4. Procédé selon l'une des revendications précédentes, **caractérisé en ce qu'**avant l'enroulement, le conducteur chauffant (14) est mis en forme de boucle.

5. Procédé selon l'une des revendications précédentes, **caractérisé en ce que** la couche de matériau polymère (26) formée par l'opération d'extrusion est réalisée en forme de ruban.
